Europäisches Patentamt

**European Patent Office**

Office européen des brevets

(11) Numéro de publication: **0 189 017**
**B1**

(12) **FASCICULE DE BREVET EUROPEEN**

(45) Date de publication du fascicule du brevet:
26.07.89

(51) Int. Cl.⁴: **A 01 D 31/00,** A 01 D 25/00,
A 01 D 45/00

(21) Numéro de dépôt: **85870188.1**

(22) Date de dépôt: **17.12.85**

(54) **Dispositif de battage pour le nettoyage de racines de végétaux.**

(30) Priorité: **19.12.84 BE 214189**

(43) Date de publication de la demande:
**30.07.86 Bulletin 86/31**

(45) Mention de la délivrance du brevet:
**26.07.89 Bulletin 89/30**

(84) Etats contractants désignés:
**BE FR NL**

(56) Documents cités:
**BE-A- 743 060**
**DE-A- 2 158 109**
**DE-A- 2 423 200**
**FR-A- 1 470 558**
**FR-A- 2 220 177**
**FR-A- 2 310 691**

(73) Titulaire: **Verstraete, Julien, Baertstraat 27,
B-8871 Pittem-Egem (BE)**

(72) Inventeur: **Verstraete, Julien, Baertstraat 27,
B-8871 Pittem-Egem (BE)**

(74) Mandataire: **Fobe, Edouard et al, Bureau VANDER
HAEGHEN 63, Avenue de la Toison d'Or,
B-1060 Bruxelles (BE)**

# Description

La présente invention est relative à un dispositif de battage pour le nettoyage de racines de végétaux lors de leur extraction du sol, dans une machine à l'aide de broyeurs, tambours ou disques portant à leur périphérie des doigts de battage par lesquels une rampe de terre découpée du sol et qui abrite les racines des végétaux est disloquée par vibrations.

Elle est appliquée au nettoyage de racines de végétaux, tels que carottes rouges, endives et salsifis, dont la terre doit être éliminée lors de la récolte, sans détérioration. Un traitement doux et efficace lors du nettoyage des racines s'élabore au mieux dans une machine arracheuse d'endives, parce que lesdites racines sont cassables et doivent encore subir l'étiolement avant de livrer les endives comestibles.

Dans plusieurs machines connues une partie du sol longeant la rangée de plantes est éloignée à l'aide d'un disque déflecteur et la rangée de plantes est découpée à l'aide d'un disque plan.

L'extraction proprement dite de la racine se réalise à l'aide d'une charrue comprenant des socs en forme de U munie de coutres rigides qui assurent l'extraction des racines du sol.

Comme décrit dans le document BE-A-743 060, la rampe de terre détachée du sol avec les racines qui y sont logées, est déchiquetée par des turbines de battée entraînées rapidement en rotation par des moteurs hydrauliques. Ceux-ci détachent la terre qui y adhère.

En réglant une distance appropriée entre les tambours ou disques rotatifs ainsi qu'en adaptant la vitesse de rotation, la terre est détachée des fruits et les mottes de terre sont pulvérisées avant d'être éliminées par un tamis.

D'autres systèmes tels que décrits dans la demande de brevet français N° 2 220 177 mettent en œuvre un élément de barrage rotatif en combinaison avec un déflecteur disposé à une distance réglable dudit élément. En raison du fait que les batteries des tambours ou disques rotatifs déjà connus comprennent des barres métalliques rigides en saillie, généralement fixées sur les tambours ou disques par soudage, lesdits systèmes présentent l'inconvénient de provoquer des dégâts non négligeables aux végétaux. Dans un carrousel de battage avec tiges métalliques fixes, la terre est déchiquetée et les tiges déchirent les racines dans le sens longitudinal et de ce fait la racine est, dans de nombreux cas, abîmée des deux côtés parce que l'écorce est arrachée.

L'endommagement de la pelure et l'arrachement des radicelles latérales radiales sont désavantageuses pour la croissance ultérieure des endives.

Parce que la vitesse périphérique des tambours ou disques rotatifs avec tiges métalliques fixes est importante, la terre est rejetée loin sur le tamis de sorte que seulement une partie de la longueur de la chaîne peut être utilisée pour séparer la terre par tamisage.

Chaque turbine porte des bras fixes, constitués de barreaux régulièrement répartis et cintrés, de manière à s'éloigner de l'axe de rotation de la turbine.

Un disque ou un volant rotatif est prévu à l'avant de chaque turbine au voisinage des socs. Il est muni de barreaux fixes équidistants. Chaque couple de turbine et disque contribue au nettoyage des betteraves en déchiquetant la rampe de terre détachée du sol et en détachant une partie importante de la terre qui recouvre lesdites betteraves.

En réglant une distance appropriée entre les tambours ou disques rotatifs ainsi qu'en adaptant la vitesse de rotation, les mottes de terre sont pulvérisées avant d'être éliminées par un tamis.

D'autres systèmes tels que décrits dans la demande de brevet français n° 2 220 177 mettent en œuvre un élément de battage rotatif en combinaison avec un déflecteur disposé à une distance réglable dudit élément. En raison du fait que les batteries des tambours ou disques rotatifs déjà connus comprennent des barres métalliques rigides en saillie, généralement fixées sur les tambours ou disques par soudages, lesdits systèmes présentent l'inconvénient de provoquer des dégâts non négligeables aux végétaux. Dans un carrousel de battage avec tiges métalliques fixes, la terre est déchiquetée et les tiges déchirent les racines dans le sens longitudinal et de ce fait la racine est, dans de nombreux cas, abîmée des deux côtés parce que l'écorce est arrachée.

L'endommagement de la pelure et l'arrachement des radicelles latérales radiales sont désavantageuses pour la croissance ultérieure des endives.

Parce que la vitesse périphérique des tambours ou disques rotatifs avec tiges métalliques fixes est importante, la terre est rejetée loin sur le tamis de sorte que seulement une partie de la longueur de la chaîne peut être utilisée pour séparer la terre par tamisage.

C'est pourquoi la capacité de nettoyage de la chaîne s'en trouve diminuée.

Dans la prolongation de la chaîne de tamisage se trouve enfin une rangée de rouleaux de triage, qui doivent éliminer le mieux possible des racines les derniers amas de terre qui y adhèrent.

Dans des circonstances de moisson pénibles, il est très difficile de briser les mottes de terre par simple secouage et tamisage et de débarrasser les racines de la terre par frottement.

Enfin, on connaît, de par la demande de brevet français n° 2 310 691, des machines de récolte et de nettoyage de tubercules comprenant au moins un disque pourvu de barreaux amovibles montés fous. Chaque barreau est constitué d'un axe sur lequel est monté un rouleau tronconique de caoutchouc.

De tels rouleaux sont destinés à équiper principalement le dispositif de transport en vue de constituer une grille de secouage et de tamisage des racines déjà débarrassées de la majeure partie de la terre.

Dans ces machines connues, le dispositif de battage proprement dit est constitué d'un disque de battage pourvu à sa périphérie de déflecteurs radiaux recourbés. Ces déflecteurs sont constitués de barres métalliques rigides dépourvues de protection caoutchoutée.

Un tel revêtement du moins s'il est réalisé en caoutchouc, subirait une usure rapide sous les efforts de frottement importans auxquels il serait soumis.

La présente invention vise à éviter les inconvénients des tambours et disques de battage connus et suggère des moyens qui permettent de réduire la vitesse de glissement entre les éléments rotatifs et les fruits.

Elle concerne une machine pour récolter et nettoyer des racines de forme allongée de végétaux, comprenant un dispositif d'extraction de ces racines, un dispositif d'évacuation des racines extraites et un dispositif de séparation de la terre adhérant aux racines, ce dispositif de séparation étant disposé entre le dispositif d'extraction et le dispositif d'évacuation et étant constitué de deux disques rotatifs portant chacun plusieurs rouleaux qui sont espacés l'un de l'autre et peuvent tourner librement autour de leur axe, essentiellement caractérisée en ce que des rouleaux portés par un disque rotatif sont disposés en regard de rouleaux portés par l'autre disque rotatif de manière à enserrer latéralement, vu dans le sens longitudinal d'avancement, un ensemble terre-racines extrait, les rouleaux en vis-à-vis étant dans ou passant par une position verticale lors du contact avec cet ensemble, et les disques rotatifs avec leurs rouleaux étant agencés de façon à ménager un intervalle de passage des racines entre un rouleau porté par un disque et un rouleau porté par l'autre disque pendant la rotation des deux disques, cet intervalle de passage allant en diminuant dans le sens longitudinal parallèlement à l'avancement des racines depuis une largeur où ces deux rouleaux battent la terre adhérant à une racine jusqu'à une largeur où ces rouleaux viennent en contact avec cette racine et l'éjectent vers le dispositif d'évacuation.

Selon une particularité de l'invention, les rouleaux de battage présentent une extrémité libre et sont portés à leur autre extrémité par un disque rotatif.

Dans une première forme de réalisation particulière de l'invention, les axes des rouleaux portés par chaque disque sont sensiblement parallèles entre eux. Dans une seconde forme de réalisation particulière, les axes des rouleaux portés par chaque disque sont situés dans un même plan. Dans ce cas, les axes des rouleaux portés par un disque rotatif et les axes des rouleaux portés par l'autre disque rotatif sont sensiblement parallèles deux à deux. Les rouleaux précités présentent de préférence une surface latérale cannelée.

D'autres particularités et détails de l'invention sont exposés dans la description ci-jointe d'une forme de réalisation particulière d'une machine selon l'invention destinée à extraire les endives, qui fait référence aux dessins annexés ci-après et qui sont donnés uniquement à titre d'exemples et dans lesquels:

la figure 1 est une vue latérale schématique, partiellement en coupe d'une charrue et de tambours de battage selon l'invention ainsi que d'une chaîne de tamisage;

les figures 2 et 3 montrent en perspective et en plan un couteau de charrue et des tambours de battage;

la figure 4 est une vue frontale d'un tambour de battage muni de rouleaux librement rotatifs;

la figure 5 est une vue en plan du tambour illustré à la figure 4;

la figure 6 est une vue en plan d'un rouleau rotatif libre;

les figures 7 et 8 montrent un disque de battage avec des dents radiales.

Dans ces figures, les mêmes notations de référence désignent des éléments identiques analogues.

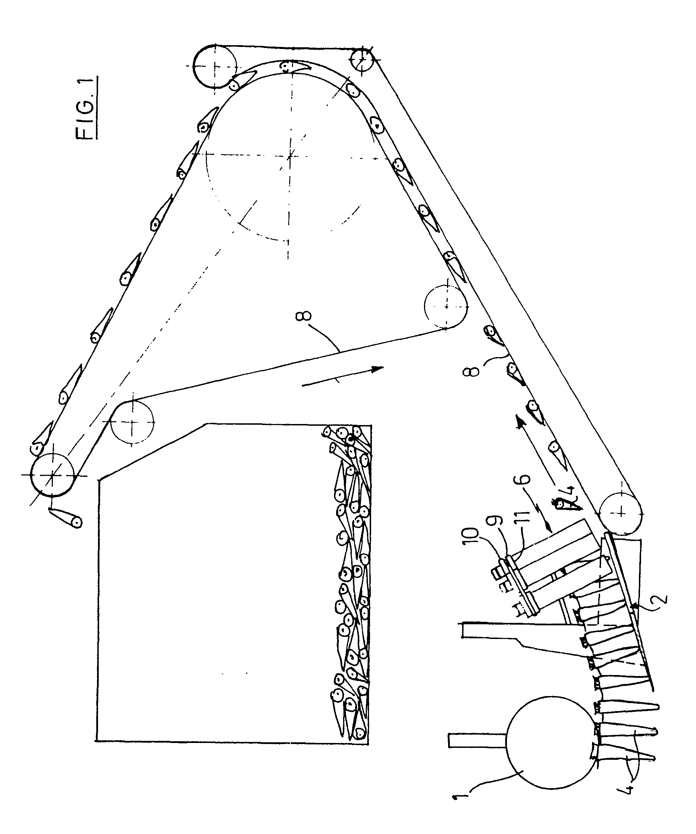

Comme illustré à la figure 1, la partie d'extraction en ligne d'une machine arracheuse comprend un disque vertical 1, un coutre 3 en forme de disque et un ponton 2. Le coutre en forme de disque est disposé devant et latéralement au ponton 2 et juste derrière le disque vertical 1. Il déverse la découpe de terre de la rangée de végétaux à extraire découpée par le disque vertical 1 à côté des racines.

Les racines 4 sont extraites au moyen du ponton 2, avec la poutre de terre soulevée par labourage qui les amène droit à l'arrière à l'aide d'un guide d'aile 5 contre un broyeur de battage 6.

Chaque broyer de battage 6 est de préférence constitué d'un tambour ou d'un disque qui, sur tout son contour, comprend une pluralité de rouleaux de battage 7 ou doigts librement rotatifs.

Les racines 4 et la poutre de terre aboutissent entre les doigts 7 du broyeur de battage 6. Par frottement avec les rouleaux de battage 7, qui sont disposés des deux côtés, la rampe de terre soulevée est détachée et déchiquetée et les racines 4 sont jetées sur une chaîne de tamisage 8 monté transversalement à l'arrière.

Comme chaîne-grille de transport sans fin, on utilise au mieux une chaîne semblable à celle décrite dans le brevet belge N° 900.062.

Contrairement à d'autres broyeurs de battage connus, constitués de tambours ou disques garnis de tiges métalliques fixes, l'usage de broyeurs de battage garnis de rouleaux de battage pivotants fous permet de repousser la terre humide au lieu de la rejeter.

Etant donné que les rouleaux de battage 7 tournent librement, la vitesse de collision entre les éléments librement rotatifs 4 et les fruits extraits du sol, est faible, de sorte que les fines radicelles ne sont pas arrachées, lorsque la terre lourde et adhérente est éliminée des racines. La défection de racines latérales est en effet désavantageuse pour le forçage des endives, lorsque la plante est rangée dans des caissons.

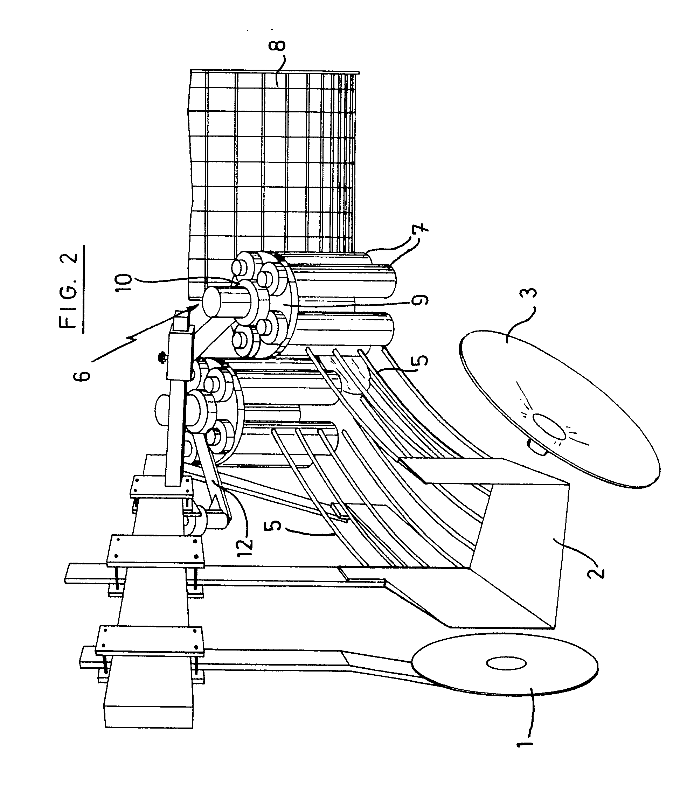

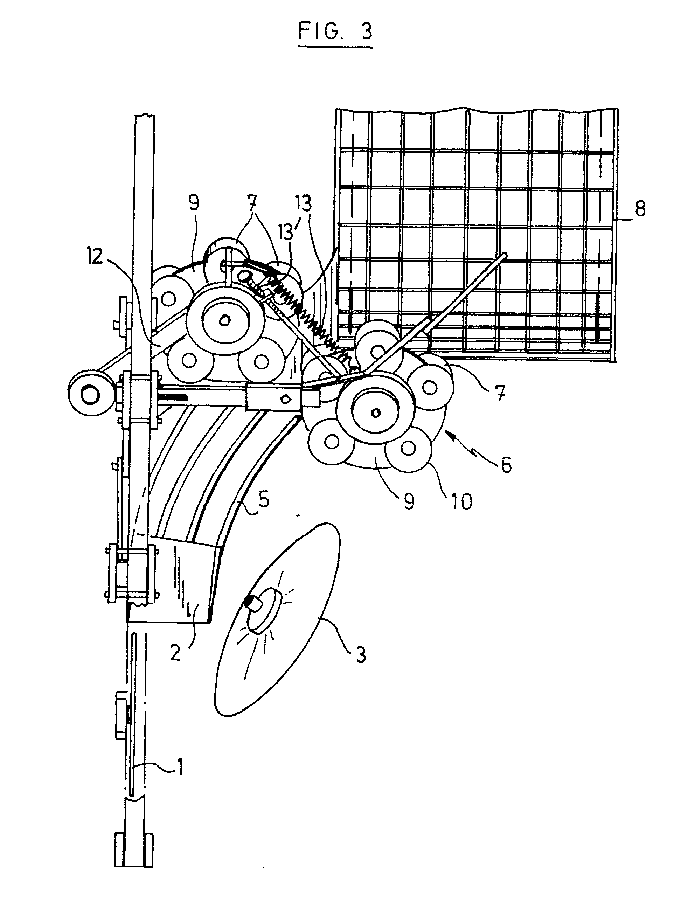

Dans une forme de réalisation particulière telle qu'illustrée aux figures 2 et 3, les rouleaux de batage 7 sont montrés sur la plaque supérieure 9 des tambours 6 au moyen des paliers 10. Ces paliers sont disposés dans des fourreaux 11, de manière à être protégés de l'infiltration de terre humide ou de boue.

Dans une machine arracheuse à une seule ligne, telle qu'illustrée à la figure 2, on fait appel de préférence à deux tambours 6 tournant l'un contre l'autre. Ils sont montés obliquement pour mieux nettoyer les racines coniques. De ce fait, il apparaît un effet de frottement sur toute la longueur des racines 4. En outre, on prévoit un angle avec la verticale, parce que les racines y viennent inclinées.

L'axe de l'un des tambours est fixe, tandis que l'autre axe peut se déplacer grâce au fait qu'il est monté sur un bras pivotant 12.

La distance minimale entre les tambours est réglée à l'aide d'une pince 13', tandis qu'un ressort 13 maintient les deux tambours à proximité l'un de l'autre

La distance entre les deux tambours augmentera lorsque la quantité à traiter croît inopinément en masse ou lorsque de grands cailloux ou analogues doivent passer.

Ce système diminue les chances de détériorer la machine ou les racines.

La probabilité d'avoir une obstruction diminue nettement en cas de brusque surcharge dans des conditions pénibles d'arrachage.

L'avantage d'éléments de battage 7 librement rotatifs par rapport à des barres rondes solidarisées rigidement à la plaque supérieure 9 réside dans le fait que les racines 4 extraite ainsi que la masse de terre qui y adhère est moins brusquée que dans les machines pourvues de barres rondes rigides soudées à la plaque supérieure 9.

D'une part, on évite la détérioration des racines et on rejette la terre moins loin sur la chaîne de tamisage 8 de sorte que la longueur totale de la chaîne peut être utilisée optimalement pour le tamisage de la terre, ce qui influence favorablement la fonction de nettoyage.

En raison du fait que les éléments de battage peuvent tourner librement, la possibilité existe désormais d'entourer ceux-ci d'un manteau de caoutchouc. Le caoutchouc est plus doux que l'acier. Il protégera donc les racines contre les blessures.

La mise en place d'un revêtement de caoutchouc sur les broyeurs de battage des machines-arracheuses connues, n'était pas possible jusqu'à présent en raison d'une usure précoce provoquée par la friction violente des racines contre les barres rondes rigides fixées sur le tambour, friction qui a toujours lieu sur le même côté des bancs

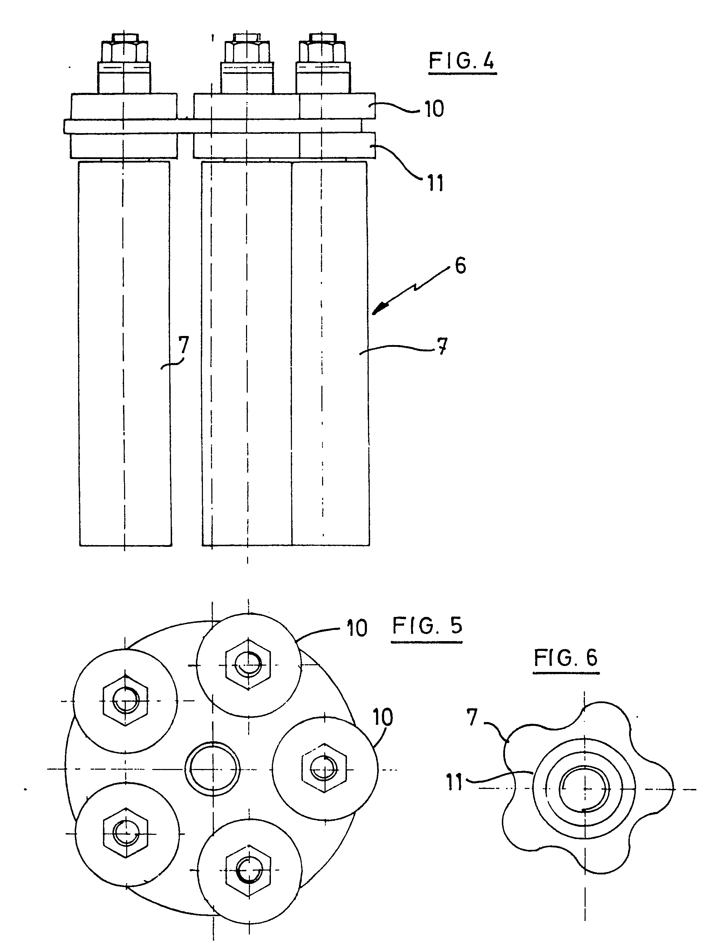

Le manteau de caoutchouc peut éventuellement présenter un profil cannelé pentagonal, qui a pour conséquence un nettoyage plus efficace. Des résidus de feuille, des mauvaises herbes, de la terre entraînée et des souches peuvent de ce fait être plus facilement éliminées (Figure 6).

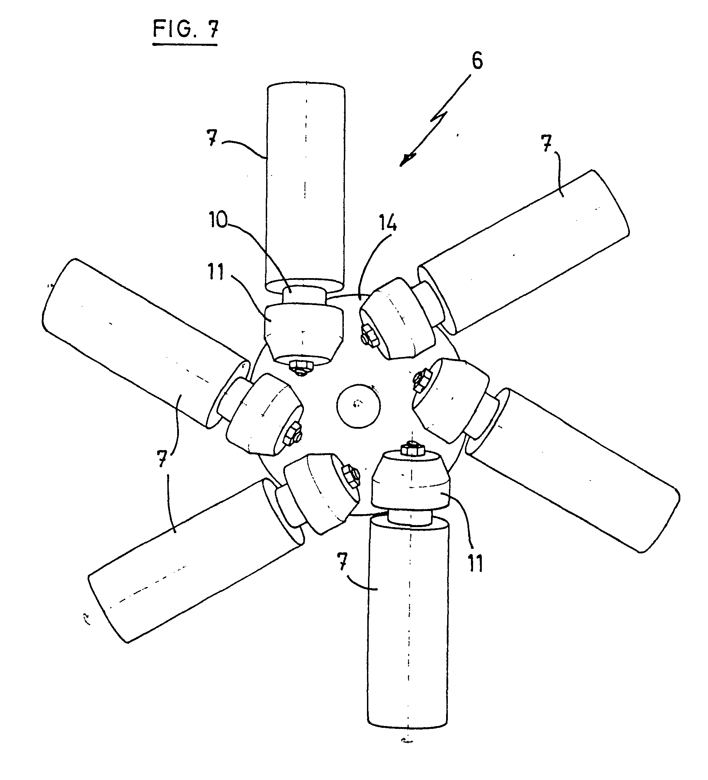

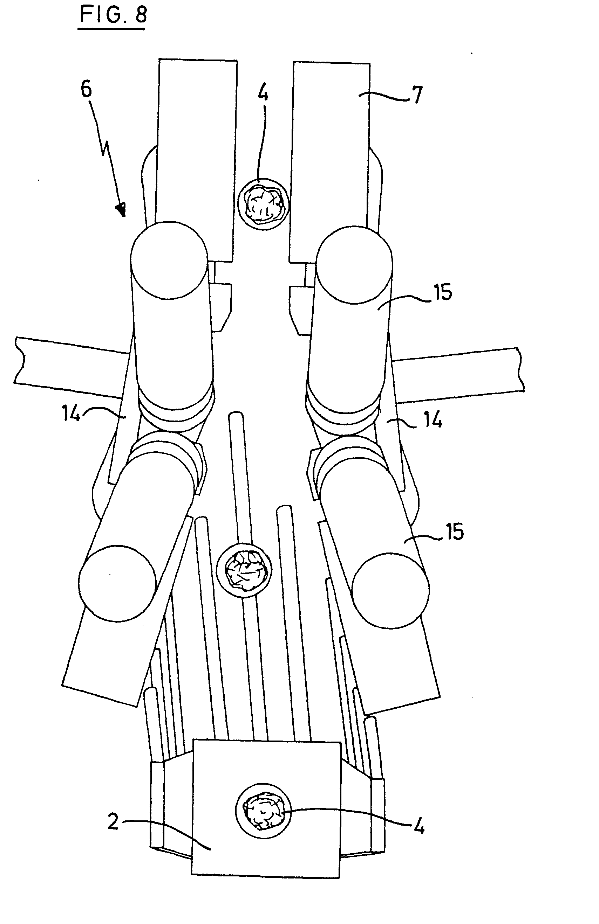

Dans une machine-arracheuse à plusieurs lignes, on peut aussi utiliser des couples de disques 6 disposés dans un même plan et munis à la périphérie de dents radiales 15 en saillie (Fig. 7 et 8).

Selon l'invention, on réalise les dents 15 de telle manière qu'elles puissent pivoter autour de leur axe. Ici également, les éléments librement rotatifs 15 éliminent avec moins de violence la terre des racines. Cela réduit la détérioration des racines 4 et améliore le nettoyage de celles-ci, surtout des radicelles.

L'invention permet aussi d'améliorer les machines existantes. Certaines machines-arracheuses contiennent par exemple un tambour de battage monté verticalement qui coopère avec un déflecteur. Selon l'invention, on peut améliorer le fonctionnement du déflecteur en remplaçant les barres rondes rigides verticales par une série de rouleaux tournant librement autour d'un axe vertical.

## Revendications

1. Machine pour récolter et nettoyer des racines de forme allongée de végétaux, comprenant un dispositif d'extraction (2) de ces racines (4), un dispositif d'évacuation (8) des racines extraites et un dispositif de séparation de la terre adhérant aux racines, ce dispositif de séparation étant disposé entre le dispositif d'extraction (2) et le dispositif d'évacuation (8) et étant constitué de deux disques rotatifs (9) portant chacun plusieurs rouleaux (7) qui sont espacés l'un de l'autre et peuvent tourner librement autour de leur axe, caractérisée en ce que des rouleaux (7) portés par un disque rotatif (9) sont disposés en regard de rouleaux (7) portés par l'autre disque rotatif (9) de manière à enserrer latéralement, vu dans le sens longitudinal d'avancement, un ensemble terre-racines (4) extrait, les rouleaux en vis-à-vis étant dans ou passant par une position verticale lors du contact avec cet ensemble, et les disques rotatifs avec leurs rouleaux étant agencés de façon à ménager un intervalle de passage des racines (4) entre un rouleau porté par un disque et un rouleau porté par l'autre disque pendant la rotation des deux disques, cet intervalle de passage allant en diminuant dans le sens longitudinal parallèlement à l'avancement des racines depuis une largeur où ces deux rouleaux battent la terre adhérant à une racine jusqu'à une largeur où ces rouleaux (7) viennent en contact avec cette racine (4) et l'éjectent vers le dispositif d'évacuation (8).

2. Machine suivant la revendication 1, caractérisée en ce que les rouleaux (7) présentent une extrémité libre et sont portés à leur autre extrémité par un disque rotatif (9).

3. Machine suivant la revendication 1, caractérisée en ce que les axes des rouleaux (7) portés par chaque disque (9) sont sensiblement parallèles entre eux.

4. Machine suivant la revendication 1, caractérisée en ce que les axes des rouleaux (7) portés par chaque disque (9) sont situés dans un même plan.

5. Machine suivant la revendication 4, caractérisée en ce que les axes des rouleaux (7) portés par un disque rotatif (9) et les axes des rouleaux portés par l'autre disque rotatif (9) sont sensiblement parallèles deux à deux.

6. Machine suivant l'une quelconque des revendications précédentes, caractérisée en ce que les rouleaux précités présentent une surface latérale cannelée (figure 6).

## Patentansprüche

1. Vorrichung zum Ernten und Säubern von länglich geformten Wurzelpflanzen, bestehend aus einer Einrichtung (2) zum Ausheben der Wurzeln (4), einer Einrichtung (8) zum Abfördern der ausgehobenen Wurzeln (4) und einer Einrichtung zum Abtrennen der den Wurzeln (4) anhaftenden Erde, wobei die Abtrenneinrichtung zwischen der Aushebeeinrichtung (2) und der Abfördereinrichtung (8) angeordnet ist und aus zwei rotierenden Scheiben (9) besteht, die je mehrere in Abstand voneinander befindliche und um ihre Achse frei laufende Rollen (7) tragen, dadurch gekennzeichnet, dass die Rollen (7) der einen rotierenden Scheibe (9) derart den Rollen (7) der anderen rotierenden Scheibe (9) gegenüberstehen, dass sie in Längsförderrichtung eine mit Erde behaftete ausgehobene Wurzel (4) seitlich umfassen und die sich gegenüberstehenden Rollen (7) bei der Berührung mit dieser Wurzel (4) sich in einer vertikalen Stellung befinden oder eine solche durchlaufen, und dass die rotierenden Scheiben (9) mit ihren Rollen (7) derart angeordnet sind, dass sie bei Umlauf der beiden Scheiben (7) einen Zwischenraum für den Durchgang der Wurzeln (4) zwischen einer Rolle (7) der einen Scheibe (9) und einer Rolle (7) der anderen Scheibe (9) bilden, der sich in Längsrichtung parallel zur Förderbewegung der Wurzeln (4) von einer Breite, bei welcher die beiden Rollen die anhaftende Erde beaufschlagen, bis zu einer Breite, bei der die Rollen (7) mit der Wurzel (4) in Berührung gelangen und diese in Richtung der Abfördereinrichtung (8) auswerfen, vermindert.

2. Vorrichtung nach Anspruch 1, dadurch gekennzeichnet, dass die Rollen (7) ein freies Ende aufweisen und mit ihrem anderen Ende an einer rotierenden Scheibe (9) gelagert sind.

3. Vorrichtung nach Anspruch 1, dadurch gekennzeichnet, dass die Achsen der von jeder Scheibe (9) getragenen Rollen (7) untereinander etwa parallel verlaufen.

4. Vorrichtung nach Anspruch 1, dadurch gekennzeichnet, dass die Achsen der von jeder Scheibe (9) getragenen Rollen (7) in ein und derselben Ebene liegen.

5. Vorrichtung nach Anspruch 4, dadurch gekennzeichnet, dass die Achsen der Rollen (7) einer rotierenden Scheibe (9) und die Achsen der Rollen (7) der anderen Scheibe (9) paarweise annähernd parallel verlaufen.

6. Vorrichtung nach einem der Ansprüche 1 bis 5, dadurch gekennzeichnet, dass die Rollen (7) eine ausgekehlte Seitenfläche aufweisen (s. Figur 6).

## Claims

1. Machine for gathering and cleaning vegetable roots of elongate shape, comprising a device (2) for extracting these roots (4), a device (8) for removing the extracted roots and a device for separating the earth adhering to the roots, this separation device being arranged between the extraction device (2) and the removal device (8) and consisting of two rotating discs (9) each carrying several rollers (7) which are located at a distance from each other and are able to rotate freely about their axes, characterized in that rollers (7) carried by a rotating disc (9) are arranged opposite rollers (7) carried by the other rotating disc (9) in such a way as to grip laterally, viewe in the longitudinal direction of forward movement, an extracted earth/root (4) mass, the rollers located opposite each other being in or passing through a vertical position during contact with this mass, and the rotating discs with their rollers being arranged so as to form a space for the roots (4) to pass between a roller carried by one disc and a roller carried by the other disc during rotation of the two discs, this passing space progressively diminishing in the longitudinal direction parallel to the forward movement of the roots from a width where these two rollers beat the earth adhering to a root to a width where these rollers (7) come into contact with this root (4) and eject it towards the removal device (8).

2. Machine according to claim 1, characterized in that the rollers (7) have one free end and are carried at their other end by a rotating disc (9).

3. Machine according to claim 1, characterized in that the axes of the rollers (7) carried by each disc (9) are substantially parallel to each other.

4. Machine according to claim 1, characterized in that the axes of the rollers (7) carried by each disc (9) are located in the same plane.

5. Machine according to claim 4, characterized in that the axes of the rollers (7) carried by one rotating disc (9) and the axes of the rollers carried by the other rotating disc (9) are substantially parallel in pairs.

6. Machine according to any one of the preceding claims, characterized in that the abovementioned rollers have a channelled lateral surface (Figure 6).

1/6

FIG. 1

2/6

FIG. 2

3/6

FIG. 3

FIG. 4

10

11

6

7

7

FIG. 5

10

10

FIG. 6

7

11

## FIG. 7

FIG. 8